# EUROPEAN PATENT APPLICATION

(11) **EP 1 113 421 A1**
(43) Date of publication of application: **04.07.2001**
(21) Application number: 00403561.4
(22) Date of filing: 15.12.2000
(51) Int. Cl.: G10L 15/26, G10L 11/02

(54) **Voice recognition process and device, and remote control device associated therewith**

(30) Priority: 17.12.1999 FR 9915953
(71) Applicant: THOMSON multimedia, 92100 Boulogne Billancourt (FR)
(72) Inventor: Soufflet, Frédéric, 92648 Boulogne Cedex (FR); Jouet, Pierrick, 92648 Boulogne Cedex (FR)
(74) Representative: Kohrs, Martin

(57) **Abstract**

The invention relates to a voice recognition device.

According to the invention, the device includes
- a circuit (23, 24, 25) for acquiring a signal comprising voice data originating from a user,
- means (22, 30) for detecting an end of voice data signal generated by the intervention of the user,
- means (26) for analysing voice data capable of modifying the evolution of the analysis as a function of the end of voice data signal.

The invention also relates to a remote control device for triggering the end of voice data signal, as well as to a process.

## Description

The invention relates to a voice recognition device with deliberate triggering of certain phases of recognition. The invention also relates to a device for effecting triggering, in particular remotely. The invention applies in particular within the field of television.

A typical voice recognition system includes on the one hand an audio processor incorporating means for acquiring and for processing an audio signal representative of the voice data to be recognized and on the other hand a linguistic decoder including the voice recognition engine proper. This engine uses an acoustic model and a language model to effect recognition on the basis of the audio signals preprocessed by the audio processor.

In particular when the language model is based on grammars, the analysis of a sentence by the recognition engine begins only after the expiry of a predetermined span during which no audio signal is received. The speaker of the system is then regarded as having finished uttering his sentence.

Depending on the application envisaged, the choice of span becomes Cornelian. If it is chosen to be overly long, the delay in processing a sentence may become crippling. If it is chosen to be overly short, then hesitations by the user in the enunciation of the sentence may trigger the processing before this enunciation has terminated. Such hesitations appear for example when the speaker becomes aware, at the same time as he begins his sentence, of data being displayed on a screen in response to previous actions.

To avoid untimely triggerings of processing following hesitations, it is conceivable to lengthen the predetermined span, the duration of which may exceed five or six seconds. In the application envisaged here, in this instance the voice control of a television receiver and of applications pertaining thereto, this order of magnitude of span is incompatible with the expectations of the consumer.

The subject of the invention is a voice recognition device, characterized in that it includes
- a circuit for acquiring a signal comprising voice data originating from a user,
- means for detecting an end of voice data signal generated by the intervention of the user,
- means for analysing voice data capable of modifying the evolution of the analysis as a function of the end of voice data signal.

Thus, the user can intervene directly on the analysis, by signifying that he has finished enunciating his text.

According to a particular embodiment, the means for analysing the voice data finalize the analysis of the voice data previously stored on receipt of the end of voice data signal.

According to a particular embodiment, the analysis means implement a Viterbi-type algorithm and the traceback through the past states so as to determine one or more sequences of words liable to correspond to the voice data is commenced upon receipt of the end of voice data signal.

According to a particular embodiment, the end of data signal is generated by manual activation of a signal generation means by the user.

According to a particular embodiment, the end of data signal generation means includes a switch of a remote control.

According to a particular embodiment, the signal comprising the voice data is received by wireless transmission.

The subject of the invention is also a remote control device including a microphone for generating a signal comprising voice data and circuits for sending the signal comprising voice data, characterized in that it furthermore includes user-actuatable means for generating and for sending an end of voice data signal.

According to a particular embodiment, the end of voice data signal generation means comprise a user-actuatable switch.

According to a particular embodiment, the switch is arranged in such a way as to control the operation of the circuits for sending the signal comprising voice data.

According to a particular embodiment, the end of voice data signal consists of the changeover from the presence of carrier of the signal comprising voice data to the absence of carrier.

The subject of the invention is also a voice recognition process characterized in that it includes the steps:
- of acquiring a signal comprising voice data,
- of analysing the signal acquired with a view to searching for words or for sequences of words representative of the signal acquired, the analysis comprising several successive phases,
- of conditioning of overstepping of at least one phase on receipt of an end of voice data signal triggered by a user.

According to a particular embodiment, the step of analysing the signal acquired includes a phase of parallel determination of a plurality of words or of sequences of candidate words representative of the signal acquired, and a phase of choosing a word or a sequence of words from among candidates.

Other characteristics and advantages of the invention will become apparent through the description of a particular nonlimiting exemplary embodiment. This example will be described in conjunction with the appended drawings, among which:
- Figure 1 is a diagram of a television reception system implementing a voice recognition subsystem,

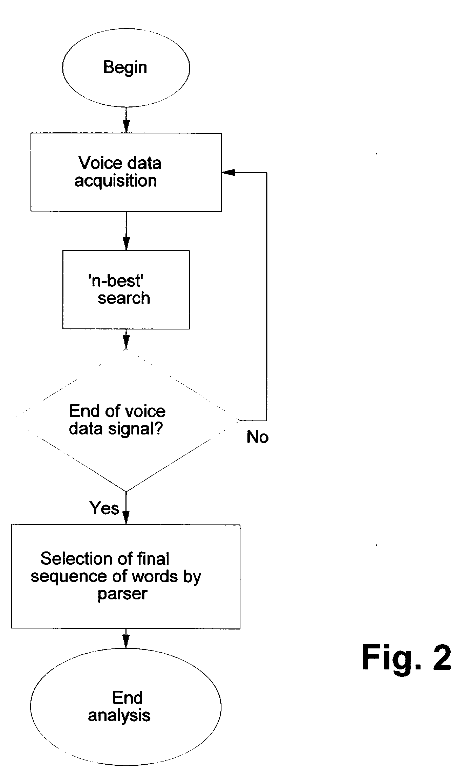

- Figure 2 is a flowchart of an exemplary implementation of the process which is the subject of the invention.

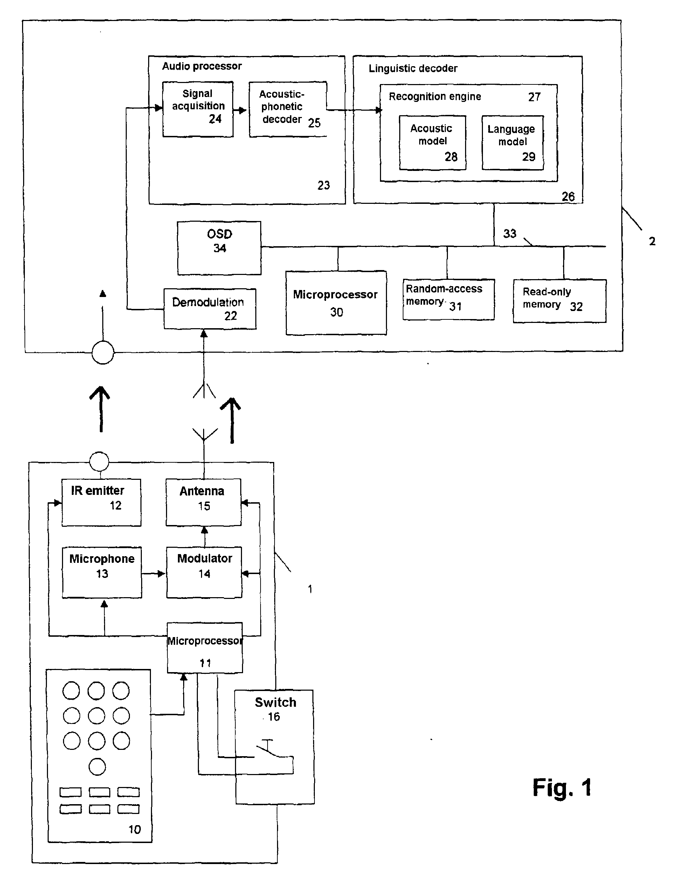

The system of Figure 1 comprises a remote control 1 and a television receiver 2..

The remote control 1 includes in a known manner a keypad of buttons 10, a microprocessor 11 configured to receive the signals originating from the keypad 10, and a circuit for analogue modulation and transmission by infrared waves 12, for sending to the television set 2.

The remote control 1 furthermore includes a microphone 13 linked to a radiofrequency modulation circuit 14. This circuit 14 is linked to an antenna 15, for sending RF signals to the television set 2. The modulation circuit 14 and the microphone 13 are controlled by the microprocessor.

The remote control is also equipped with a switch 16, linked to the microprocessor 11.

The infrared pathway of the remote control operates conventionally. The radiofrequency pathway operates as follows: when the user actuates the switch 16, the microprocessor 11 controls the modulation circuit and the microphone appropriately so that the user's voice signals are processed and transmitted by the antenna 15. When the switch is not actuated, the power supply to all the facilities required for the radiofrequency pathway is cut, so as to reduce their consumption.

An RF signal is therefore transmitted to the television set only when the switch is actuated.

A remote control of a similar type is described in French Patent Application FR 9804847, filed on 17 April 1998 in the name of THOMSON multimedia and published on 22 October 1999 under number FR 2777681.

The role of the remote control is therefore simply to acquire the audio signal and to transmit it in analogue form to the television set. Within the framework of the present example, the processing performed by the remote control is reduced to the minimum so as to limit its electrical consumption.

The television receiver 2 includes an antenna 20 for receiving the signals originating from the antenna of the remote control, as well as an infrared reception circuit 21. The antenna 20 is linked to a tuning and demodulation circuit 22. The demodulated signal is transmitted to an audio processor 23 which includes an acquisition circuit 24 and an acoustic-phonetic decoder 25. The acquisition circuit is furnished with an analogue-digital converter (not illustrated) so as to carry out the sampling of the audio signal in baseband at a frequency of 22 kHz.

The acoustic-phonetic decoder translates the digital samples into acoustic symbols chosen from a predetermined alphabet.

A linguistic decoder 26 processes these symbols with the aim of determining, for a sequence A of symbols, the most probable sequence W of words, given the sequence A. The linguistic decoder 26 includes a recognition engine 27 using an acoustic model 28 and a language model 29. The acoustic model is, for example, a so-called "Hidden Markov Model" (or HMM). It calculates the acoustic scores of the relevant sequences of words in a manner known per se. The language model implemented in the present exemplary embodiment is based on a grammar described with the aid of syntax rules of the Backus Naur form. The language model is used to determine a plurality of hypotheses of sequences of words and to calculate linguistic scores.

The recognition engine is based on a Viterbi-type algorithm referred to as "n-best". The n-best type algorithm determines, at each step of the analysis of a sentence, the n sequences of words which are most probable. At the end of a sentence, the most probable solution is chosen from among the n candidates, on the basis of the scores provided by the acoustic model and the language model.

The television receiver furthermore comprises a microprocessor 30, a random-access memory 31 and a read-only memory 32, which are connected to an internal bus 33. Although the audio processor and the linguistic decoder are represented as separate circuits in Figure 1, at least the acoustic-phonetic decoder and the linguistic decoder can be implemented in the form of software stored in the read-only memory 32 and executed by the microprocessor 30.

The television receiver also comprises an on-screen display circuit ("OSD") 34 able to generate video signals representative of menus for controlling the receiver, of texts and/or of graphics. The circuit 34 is also controllable by applications of the electronic program-guide type which are executed by the microprocessor 30. As appropriate, the signals generated by the circuit 34 will partially or wholly replace those emanating from the circuits (not illustrated) for processing the video signal received by the antenna. A cathode-ray tube (not illustrated) furnished with the appropriate deflection circuits makes it possible to display the video signals.

The manner of operation of the recognition engine will now be described more particularly. As mentioned, the latter uses a Viterbi-type algorithm (n-best algorithm) to analyse a sentence composed of a sequence of acoustic symbols (vectors). The algorithm determines the N sequences of words which are most probable, given the sequence A of acoustic symbols which is observed up to the current symbol. The most probable sequences of words are determined through the stochastic-grammar type language model. In conjunction with the acoustic models of the terminal elements of the grammar, which are based on HMMs (Hidden Markov Models), a global hidden Markov model is then produced for the application, which therefore includes the language model and, for example, the phenomena of coarticulations between terminal elements. The Viterbi algorithm is implemented in parallel, but instead of retaining a single transition to each state during iteration i, the N most probable transitions are retained for each state.

Information relating in particular to Viterbi, beam-search and "n-best" algorithms is given in the work:
"Statistical methods for speech recognition" by Frederick Jelinek, MIT Press 1999 ISBN 0-262-10066-5, chapters 2 and 5 in particular.

The analysis performed by the recognition engine stops when the set of acoustic symbols relating to a sentence have been processed. The recognition engine then has a trellis consisting of the states at each previous iteration of the algorithm and of the transitions between these states, up to the final states. Ultimately, the N most probable transitions are retained from among the final states and their N associated transitions. By tracing the transitions back from the final states, the N most probable sequences of words corresponding to the acoustic symbols are determined. These sequences are then subjected to processing using a parser with the aim of selecting the unique final sequence on grammatical criteria.

According to the present exemplary embodiment, the last symbol to be analysed before proceeding with the traceback is assumed to be received as soon as the speaker releases the switch 16 of the remote control. The remote control then no longer emits any RF carrier. This absence of carrier is detected in a known manner by the tuning circuit 22 which alerts the microprocessor of the receiver by an appropriate interrupt. The recognition engine then terminates its analysis on the basis of the acoustic symbols received and provides the application which manages the program guide with the most probable sequence of words.

This makes it possible to take into account a deliberate signal on the part of the user for terminating the analysis of the sentence in progress. The voice signal and the end of sentence cue are therefore not correlated.

According to a variant embodiment, the receiver assumes that the speaker has finished enunciating his text when the first of the following events happens: detection of absence of carrier or detection of silence for a specified time interval.

According to a particular embodiment, the remote control emits a specific signal following the releasing of the switch 16 and before cutting off the power supply to the microphone and to the send circuits, with the aim of aiding the detection of release by the receiver. This specific signal is, for example, a burst at a particular frequency.

According to a particular embodiment of the invention, the power supply is cut only after a predetermined timeout, with the aim of avoiding the consequences of inadvertent temporary release of the switch 16. This timeout is, for example, of the order of half a second. If the switch 16 is actuated again during this timeout, then the power supply to the microphone and to the send circuits of the remote control is maintained.

Although the end of voice data signal is triggered by virtue of a remote control in the exemplary embodiment described above, other means may be used, especially buttons of the receiver device.

## Claims

1. Voice recognition device, characterized in that it includes
- a circuit (23, 24, 25) for acquiring a signal comprising voice data originating from a user,
- means (22, 30) for detecting an end of voice data signal generated by the intervention of the user,
- means (26) for analysing voice data capable of modifying the evolution of the analysis as a function of the end of voice data signal.

2. Device according to Claim 1, characterized in that the means for analysing the voice data finalize the analysis of the voice data previously stored on receipt of the end of voice data signal.

3. Device according to Claims 1 or 2, characterized in that the analysis means implement a Viterbi-type algorithm and in that the traceback through the past states so as to determine one or more sequences of words liable to correspond to the voice data is commenced upon receipt of the end of voice data signal.

4. Device according to one of Claims 1 to 3, characterized in that the end of data signal is generated by manual activation of a signal generation means (16) by the user.

5. Device according to Claim 4, characterized in that the end of data signal generation means includes a switch (16) of a remote control (1).

6. Device according to one of Claims 1 to 5, characterized in that the signal comprising the voice data is received by wireless transmission.

7. Remote control device (1) including a microphone (13) for generating a signal comprising voice data and circuits (14, 15) for sending the signal comprising voice data, characterized in that it furthermore includes user-actuatable means (11, 14, 15, 16) for generating and for sending an end of voice data signal.

8. Device according to Claim 7, characterized in that the end of voice data signal generation means comprise a user-actuatable switch (16).

9. Device according to Claim 8, characterized in that the switch (16) is arranged in such a way as to control the operation of the circuits (14, 15) for sending the signal comprising voice data.

10. Device according to one of Claims 7 or 8, characterized in that the end of voice data signal consists of the changeover from the presence of carrier of the signal comprising voice data to the absence of carrier.

11. Voice recognition process, characterized in that it includes the steps:
- of acquiring a signal comprising voice data,
- of analysing the signal acquired with a view to searching for words or for sequences of words representative of the signal acquired, the analysis comprising several successive phases,
- of conditioning of overstepping of at least one phase on receipt of an end of voice data signal triggered by a user.

12. Process according to Claim 11, characterized in that the step of analysing the signal acquired includes a phase of parallel determination of a plurality of words or of sequences of candidate words representative of the signal acquired, and a phase of choosing a word or a sequence of words from among candidates.
